# EUROPEAN PATENT SPECIFICATION

(11) **EP 0 507 524 B1**
(45) Date of publication and mention of the grant of the patent: **26.07.1995**
(21) Application number: 92302760.1
(22) Date of filing: 27.03.1992
(51) Int. Cl.: H01S 3/03

(54) **Metal vapour laser apparatus and method**
Metalldampflaser-Apparat und -Verfahren
Appareil laser à vapeur métallique et méthode

(30) Priority: 27.03.1991 JP 63502/91; 27.03.1991 JP 63520/91
(43) Date of publication of application: 07.10.1992
(73) Proprietor: KABUSHIKI KAISHA TOSHIBA, Kawasaki-shi, Kanagawa-ken 210 (JP)
(72) Inventor: Suzuki, Setuo, c/o Intellectual Property Div., Minato-ku, Tokyo 105 (JP); Iseki, Yasushi, c/o Intellectual Property Div., Minato-ku, Tokyo 105 (JP); Watanabe, Ikuo, c/o Intellectual Property Div., Minato-ku, Tokyo 105 (JP); Hayashi, Kazuo, c/o Intellectual Property Div., Minato-ku, Tokyo 105 (JP); Noda, Etsuo, c/o Intellectual Property Div., Minato-ku, Tokyo 105 (JP); Ogawa, Tomoko, c/o Intellectual Property Div., Minato-ku, Tokyo 105 (JP); Kimura,Hironobu /o Intellectual Property Div:, Minato-ku Tokyo 105 (JP); Aoki, Nobutada c/o Intellectual Property Div., Minato-ku, Tokyo 105 (JP)
(74) Representative: Kirk, Geoffrey Thomas

(56) References cited:
- FR-A- 2 112 134
- US-A- 3 654 567
- US-A- 4 701 925
- JAPANESE JOURNAL OF APPLIED PHYSICS vol. 25, no. 11, November 1986, pages 1677- 1679; ZHEN-GUO HUANG ET AL.: 'INFLUENCE OF MOLECULAR GASES ON THE OUTPUT CHARACTERISTICS OF A COPPER VAPOR LASER'

## Description

The present invention relates to laser apparatus which employs a metal vapour heated by an electric discharge and to a method of operating such laser apparatus.

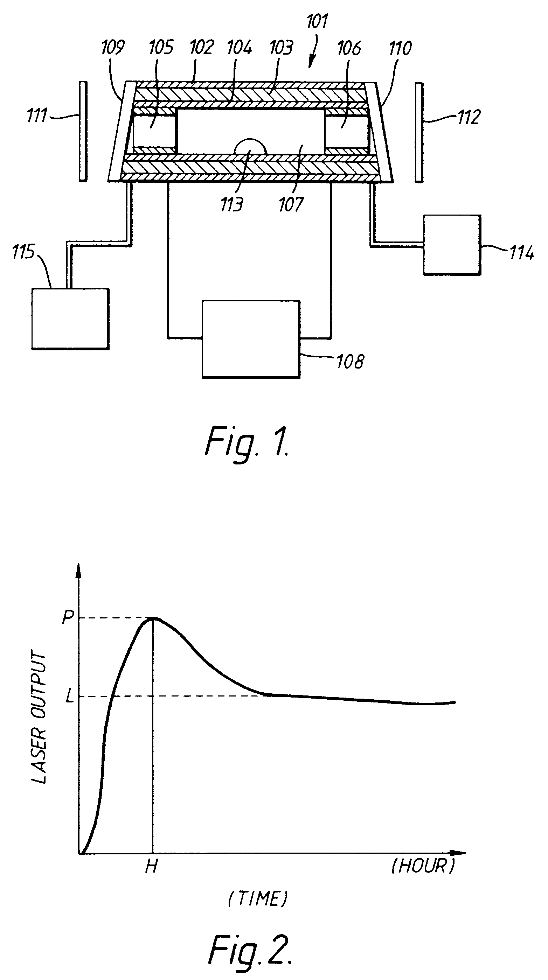

A conventional metal vapour laser apparatus 101 is shown in Figure 1. A cylindrical vacuum container 102 has a heat insulating material 103 within it and surrounding a plasma tube 104. A pair of discharge electrodes 105, 106 are located at respective opposite ends of the plasma tube 104.

The discharge electrodes 105, 106 are connected to a power supply 108. Further, the vacuum container 102 is sealed hermetically by windows 109, 110 at opposite ends of the container 102. A resonator, comprised of an output mirror 111 and a total reflective mirror 112, is provided outside the windows 109, 110. A metal medium in the form of lumps 113 is provided within the plasma tube 104.

One end of the vacuum container 102 is connected to a buffer gas supply device 114 and a vacuum pump 115 is connected to the opposite end. Buffer gas (rare gas, such as neon, helium, etc.) is supplied into the vacuum container 102 by the buffer gas supply device 114 and the buffer gas in the vacuum container 102 is exhausted by the vacuum pump 115.

When a laser beam is to be generated by the metal vapour laser apparatus 101 described above, a buffer gas is supplied into the vacuum container 102 from the buffer gas supply device 114 and is then exhausted from the vacuum container 102 by the vacuum pump 115 in a manner to maintain a discharge region 107 under low pressure. Voltage is applied between the discharge electrodes 105, 106 from the power supply 108, and a pulsed discharge occurs in the discharge region 107. The plasma tube is heated and the metal lumps 113 are also heated to within the range of 1500°C to 1700°C and converted to metal vapour. The metal atoms in the vapour state are excited by the glow discharge in the plasma tube 104 and the laser beam is developed at the mirrors 111, 112 of the resonator.

To increase the laser beam output of such conventional apparatus, it has been the practice to increase the diameter of the bore of the discharge region 107. However, if the bore of the discharge region 107 becomes about 60mm or more, (i.e., the cross-sectional area is 25cm² or more), intensity near the centre of the laser beam decreases. If the bore becomes about 80mm, this phenomenon becomes more and more conspicuous. This phenomenon is generally referred to as an "annular beam" and occurs because, in a metal vapour laser device with the discharge region 107 having a large bore, the temperature of gas around the centre of the discharge region 107 is generally higher than the temperature of that near the wall of the plasma tube 104 by more than 1000°C. As a result, the density of the lower level atoms in the centre is increased relative to the density near the wall. As the result, the gain in the centre part is reduced to produce the annular beam.

As the bore of the discharge region 107 is increased, the ratio of laser beam output to input electrical power, i.e., energy efficiency, tends to decrease. Generally, the laser beam output is increased with discharge power. When the electrical discharge power is especially high, or the bore of the plasma tube is very large, or cycle frequency is high, the decrease in laser beam output efficiency is remarkable.

With respect to the bore, the annular beam phenomenon begins to occur when the bore size is about 60mm and increases remarkably when the bore size is about 80mm. The cause of the phenomenon is that, when the temperature at the centre of the discharge region 107 is high, the metal atomic density at lower oscillation levels becomes higher at the centre of the region 107 and lowers the intensity of the laser beam in that region.

The annular beam phenomenon is represented in Figure 2 by a curve resulting from a plotting of laser output power against time of laser operation. As shown, after (H) hours of laser operation, a peak power (P) of the laser beam is developed. However, thereafter the power is gradually reduced to a constant power (L) which is significantly lower than peak power (P).

A report of a study that attempted to prevent the annular beam phenomenon and increase the output by de-exciting the lower level metal atoms by mixing molecular gas, such as hydrogen, etc., in buffer gas to have molecular gas collide with the lower level metal atoms in the small bore laser device (the direct diameter 32mm) is found in an article by Zhen-Guao Huang et al, Japanese Journal of Applied Physics, Vol. 25, no. 11, 1986 pp.1677-1679. According to this study, the annular beam of a green beam in a small bore was improved and increase of laser output power was observed at a mixing ratio below 1.8% of hydrogen and neon gas.

However, in the article reporting the above study, nothing was described about improving the ratio of a green beam line and a yellow beam line (G/Y ratio) to evaluate the annular beam phenomenon. When the G/Y ratio is large, (i.e., the green beam lines are greater in number than the yellow beam lines), the annular beam increases at a lower rate but, when the G/Y ratio is small, (i.e., the green beam lines are less in number than the yellow beam lines), the annular beam increases at a high rate of increase and the intensity of the oscillated laser beam at the centre axis decreases. The relation between G/Y ratio and the annular beam phenomenon is found in the reported study. The value of G/Y ratio, however, is used as a measurement for the annular beam phenomenon. There is no description about improving the G/Y ratio to reduce the annular beam.

Further, in the above study, the laser output efficiency per applied power is as low as about 0.5% and is not an efficiency at the practical level (on 1.5%).

Laser output power and laser efficiency depend on the temperature of the metal lumps used as the laser medium because the metal vapour density is determined by the temperature of the metal lumps. Therefore, the temperature of the metal lumps must be controlled to maintain the metal lumps at the optimum temperature to supply the metal vapour in an optimum amount. Only in this way can the laser beam be obtained efficiently at higher laser output power. To control the temperature to the optimum value, the material for the thermal insulation and the thickness of the thermal insulation must be established for the point of the heat transfer rate and the input energy to the plasma in order to optimise the temperature of the plasma tube.

It is an object of the present invention to provide a high output and high efficiency metal vapour laser apparatus.

In accordance with the present invention (claim 1), there is provided a metal vapour laser apparatus including an evacuatable container; means for evacuating the container; a pair of spaced electrodes in the container; a metal medium in the container and means for supplying a buffer gas to the container; characterised in the provision of means for determining when melting of the metal medium occurs due to an electric discharge between the electrodes and means responsive to the determining means to cause at least one additional gas to be supplied to the container. Claim 16 is related to such a metal vapour laser apparatus having means for controlling the mixture ratio of the gases by detecting a condition of the apparatus.

Claim 20 is related to a method of operating such a metal vapour laser apparatus.

Especially, a molecular gas is recomended as the supplying gas.

In order that the invention may be more readily understood, it will now be described, by way of example only, with reference to the accompanying drawings, in which:-
Figure 1 is a schematic section view of a conventional metal vapour laser apparatus;
Figure 2 is a graph showing the characteristics of the output power of a conventional metal laser apparatus;
Figure 3 is a schematic sectional view of a metallic vapour laser apparatus of a first embodiment according to the present invention;
Figures 4 and 12 are graphs showing the characteristics of laser output power;
Figure 5 is a graph showing the relation between the surface temperature of metal and the mixture ratio of the buffer gas;
Figure 6 is a schematic view of an apparatus to detect G/Y ratio;
Figure 7 is a graph showing the relation between G/Y ratio and added amount of hydrogen gas;
Figures 8a and 8b are graphs showing the distribution of the laser beam intensity in the radial direction of the discharge ares;
Figure 9 is a graph showing the characteristics of the laser beam output to added amount of hydrogen gas;
Figure 10 is a schematic sectional view of a metal vapour laser apparatus of a second embodiment of the invention;
Figures 11, 13 to 15, 20 and 24 are schematic sectional views of other metal vapour laser apparatus according to embodiments of the invention;
Figure 16 is a graph showing changes of the current value, voltage value and resistance value;
Figure 17 is a graph to be used to detect the laser beam radiation;
Figure 18 is a schematic view showing a means to detect a radiation of laser apparatus;
Figure 19 is a graph to be used to detect the laser beam radiation;
Figures 21 and 22 are graphs showing the relation between the temperature and laser output; and
Figure 23 is a graph showing the relation between the G/Y ratio and the laser output.

### Embodiment 1

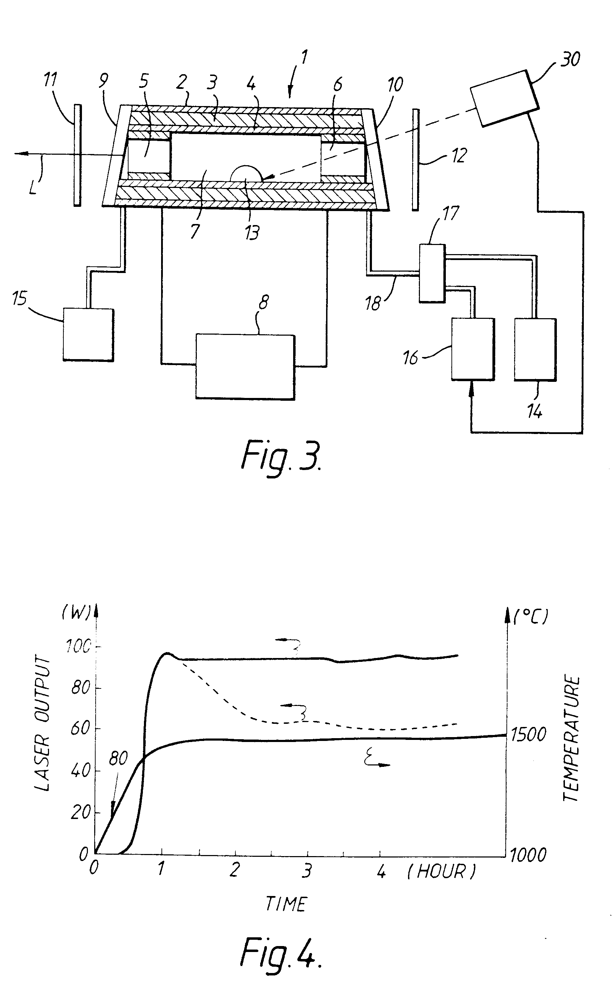

A metal vapour laser apparatus 1, according to the present invention is shown in Figure 3 to include a buffer gas filled cylindrical evacuatable container 2 having a heat insulating material 3 and a plasma tube 4. A pair of discharge electrodes 5, 6 are set at respective opposite ends of the plasma tube 4. A discharge region 7 is surrounded by the plasma tube 4 and the discharge electrodes 5, 6. In this embodiment, the diameter of the discharge region area 7, i.e., the inner diameter of the plasma tube 4, is 80mm (the area of the tube is about 50cm²).

The discharge electrodes 5, 6 are connected to a power supply 8. The inside of the container 2 is sealed hermetically by windows 9, 10 closing both ends of the container. A resonator, comprised of an output mirror 11 and a total reflective mirror 12, is provided outside of the windows 9, 10. In addition, laser medium metal lumps 13 are provided in the plasma tube 4. In this embodiment, the metal lumps are of copper.

The surface temperature of the metal lumps is measured by a thermal detector 30 comprising a radiation thermometer. A measurement signal from the detector 30 is input to a molecular gas supply device 16, described in more detail below.

The container 2 is connected to a buffer gas supply device 14 and an exhaust device 15. In this embodiment, neon gas, one of the rare gases, is used as the buffer gas, and a hydrogen gas is used as a molecular gas. The buffer gas supply device 14 and the molecular gas supply device 16 are connected through a gas mixer 17 to the vacuum container 2 by way of a tube 18.

The buffer gas and the molecular gas are exhausted from the container 2 by the exhaust device 15 at a rate greater than the rate of flow from the respective supply devices 14, 16. Thus, both of these gases are caused to flow in the container 2 under low pressure. The exhaust device 15 includes a rotary pump, etc.

When operation of the apparatus 1 is initiated to generate a laser beam, the container 2 is evacuated and, initially, only one kind of buffer gas is supplied into the container 2 by the buffer gas supply device 14. High voltage is applied between the discharge electrodes 5, 6 from the power supply 8 and a pulsed di:charge begins to occur in the discharge region 7. The plasma tube 4 is heated and metal lumps 13 in the tube 4 are also heated and converted to a metal vapour by the discharge. The metal atoms in the vapour state are excited by the discharge and laser oscillation obtained. A laser beam (L) is radiated through the output mirror 11.

In this embodiment, the surface temperature of the metal lumps can be detected by the temperature detecting device 30 at any time. When the detecting device 30 detects the melting point of the metal lumps, (in this case using copper lumps), a control signal is sent to the molecular gas supply device 16. By this control, the molecular gas is mixed with the buffer gas from the supply device 14 by control of the molecular gas supply device 16 and the mixed gas is supplied to the container 2 through the pass tube 18.

After melting of the metal lumps has commenced, i.e., the temperature of the metal vapour is at or above a certain value, the results of changing the ratio of the molecular gas to the buffer gas is explained in more detail below.

In Figure 4, the changes of the surface temperature of the metal lumps and laser output are shown. When the surface temperature exeeds about 1210°C, i.e., the vapour pressure of copper metal is over about 10⁻²% when the buffer gas pressure is 25 Torr (1 Torr = 133.32 Pascal), the mixing of hydrogen gas with the buffer gas is started (pointed by the arrow 80).

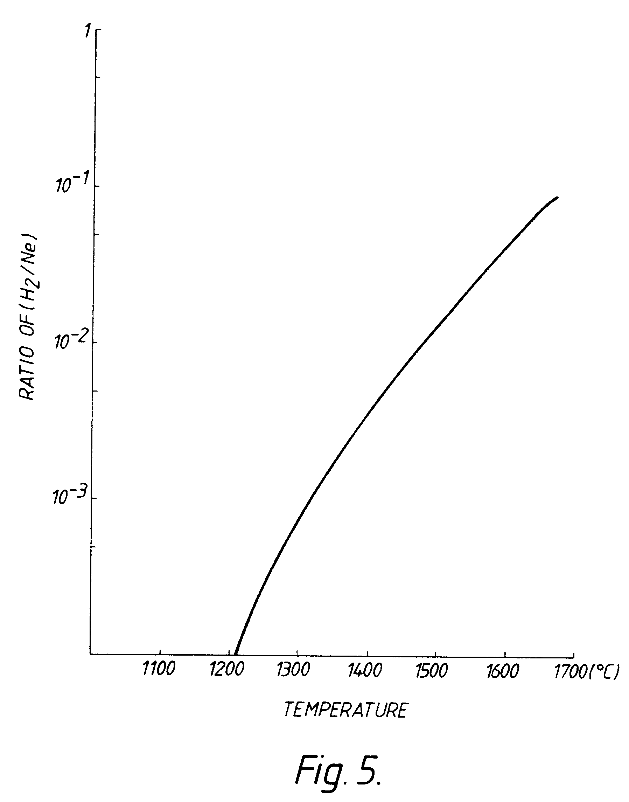

After about one hour from the start of the operation, the ratio of the molecular gas to the buffer gas becomes a reasonable value to obtain the peak output. In this case, by the adding of hydrogen gas, reduction of the laser output is prevented (shown by a solid line). The case of not adding a molecular gas is shown by a dotted line. There is a relationship between the metal vapour pressure, the buffer gas pressure and the surface temperature of the metal lumps. For instance, when the neon gas is used as the buffer gas, (the pressure of the gas is 25 Torr), the relation between the ratio of the molecular gas to the buffer gas and the surface temperature is shown in Figure 5.

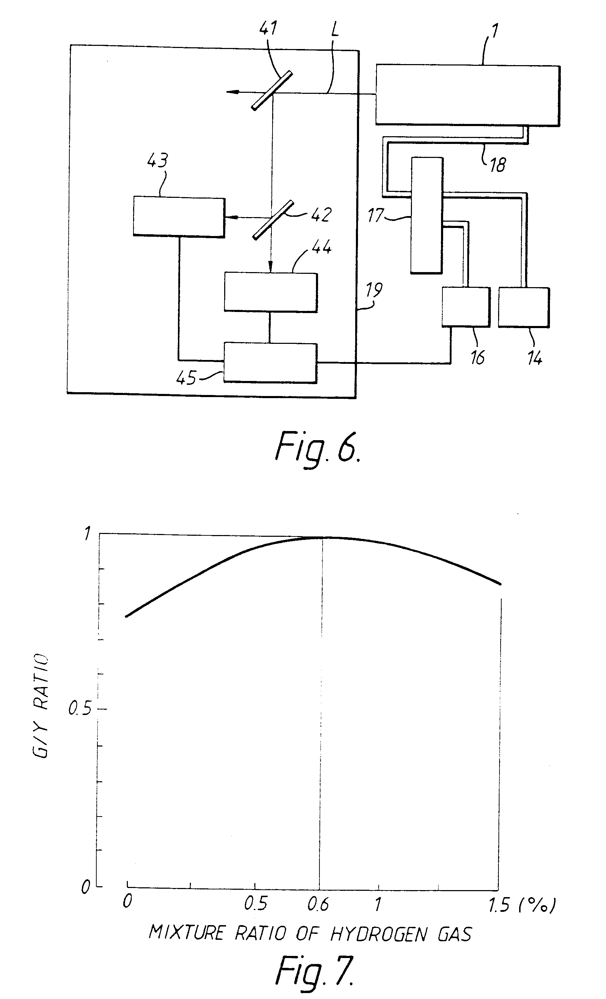

The ratio of G to Y (G/Y) is detected and confirmed to measure the degrees of annular beam by the device shown in Figure 6.

As shown in Figure 6, a measuring device 19 to obtain the green and yellow beam lines includes a mirror 41 to reflect part of laser beam (L) to the mirror 42. The mirror 42, in turn, separates wavelengths 510.0nm and 578.3nm from the laser beam wavelengths reflected by the mirror 41. Optical detectors 43, 44 detect the green and yellow beams separated by the mirror 42, and the control unit 45 calculates G/Y ratio from these green and yellow beams. The signal from the control unit 45 is transmitted to the molecular gas supply device 16 so that the molecular gas is automatically supplied to the buffer gas.

Figure 7 shows the relationship of the ratio of the green beam line (G) to the yellow beam line (Y) (G/Y) and the mixture ratio of hydrogen has to be supplied in proportion to the size of the annular beam.

As is seen from Figure 7, the G/Y ratio with hydrogen gas can be larger than the G/Y ratio without hydrogen gas. In this embodiment, when the mixing ratio of hydrogen gas is 0.6%, the G/Y ratio reaches a peak.

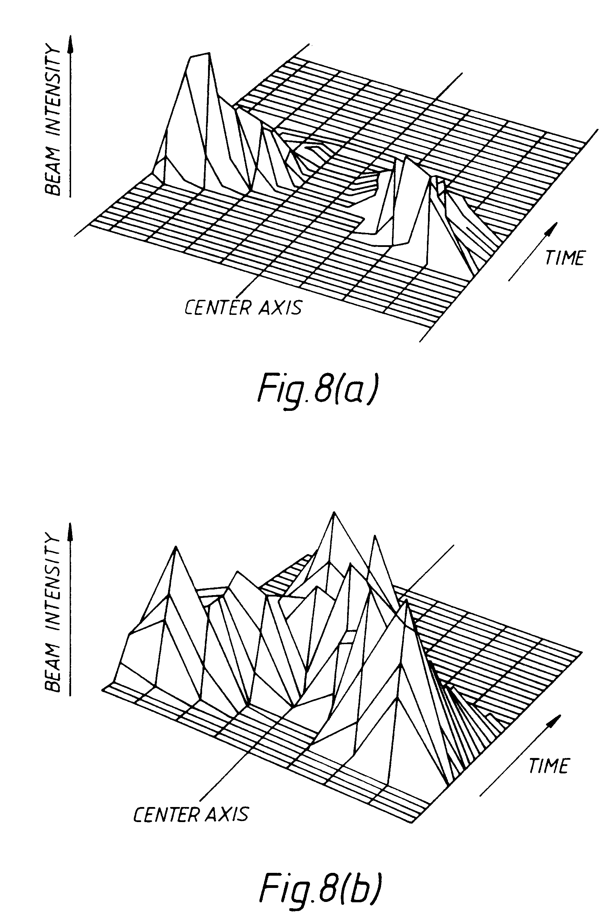

Figures 8a and 8b show the time resolved radial distribution of laser beam intensity when the mixture ratio of hydrogen gas is 0% (Figure 8a) and 0.6% (Figure 8b), respectively.

When no hydrogen gas is supplied, as shown in Figure 8a, the output at the centre of the laser beam is almost zero, as a result of the annular beam phenomenon. On the other hand, as shown in Figure 8b, it can be seen that, when 0.6% hydrogen gas is supplied after the copper metal lumps have melted, the output at the centre of the laser beam is increased and the annular beam phenomenon was reduced.

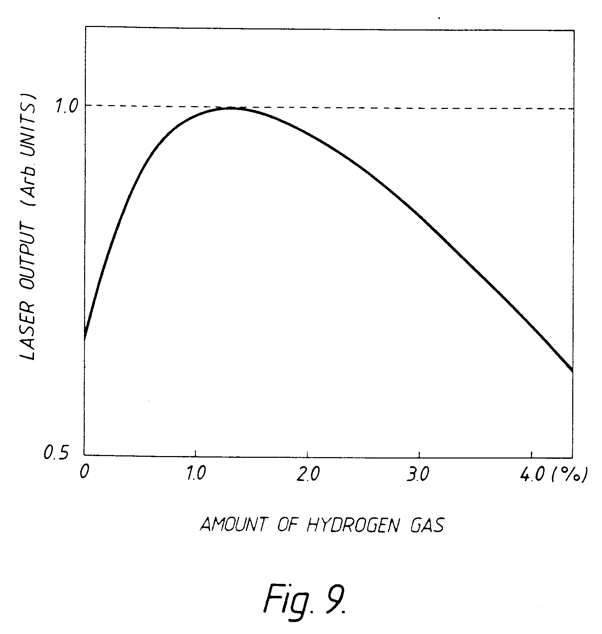

Figure 9 shows the relation of laser beam outputs to mixture ratio of hydrogen gas. As shown in Figure 9, hydrogen gas in the mixture ratio of 0.1% to 4.0% is very effective to keep the mixing ratio of buffer gas and metal vapour while the intensity of the laser beam is kept at a high level. The hydrogen is especially effective when the electric discharge power density is high or the frequency is high. The mixing ratio of hydrogen gas between 1.0% to 1.5% is most effective to obtain the maximum value of the laser output.

In this invention, the molecular gas can be mixed at any time as and after the metal lumps melt but, if the molecular gas is mixed before the metal lumps melt, the electric discharge becomes unstable and only weak power of laser beam can be generated.

### Embodiment 2

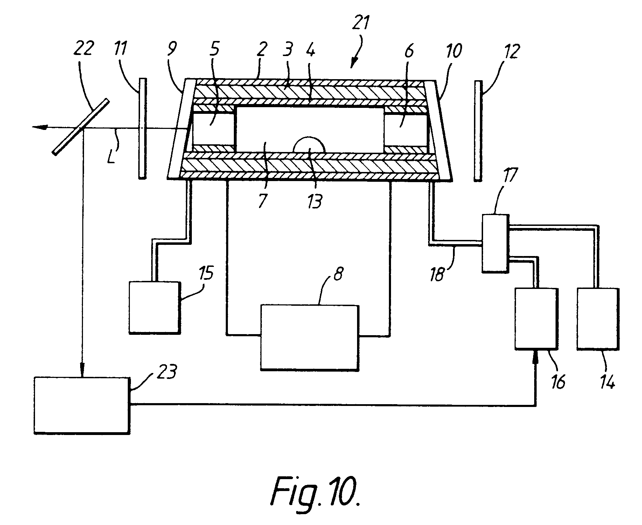

Figure 10 shows metal vapour laser apparatus 21 representing a second embodiment of the invention. Elements in Embodiment 2 which are the same as elements in Embodiment 1 are designated by the same reference numerals.

The major difference between Embodiment 2 and Embodiment 1 is that, in Embodiment 2, the molecular gas is mixed after melting the metal lumps to generate the laser beam.

As shown in Figure 10, the metal vapour laser apparatus 21 in this embodiment has a mirror 22 to reflect part of the laser beam 1, which passes through a mirror 11, to a laser beam reflected by the mirror 22. The signal from the detector 23 controls the molecular gas supply device 16 to send the molecular gas to the gas mixing device 17.

The gas mixing device 17 supplies the buffer gas and the molecular gas in suitable mixture ratio to the container 2 and the same effect as in Embodiment 1 occurs.

One of the ways to detect the laser beam is to detect the emission spectrum, as mentioned above. Other ways also can be used to detect the laser beam.

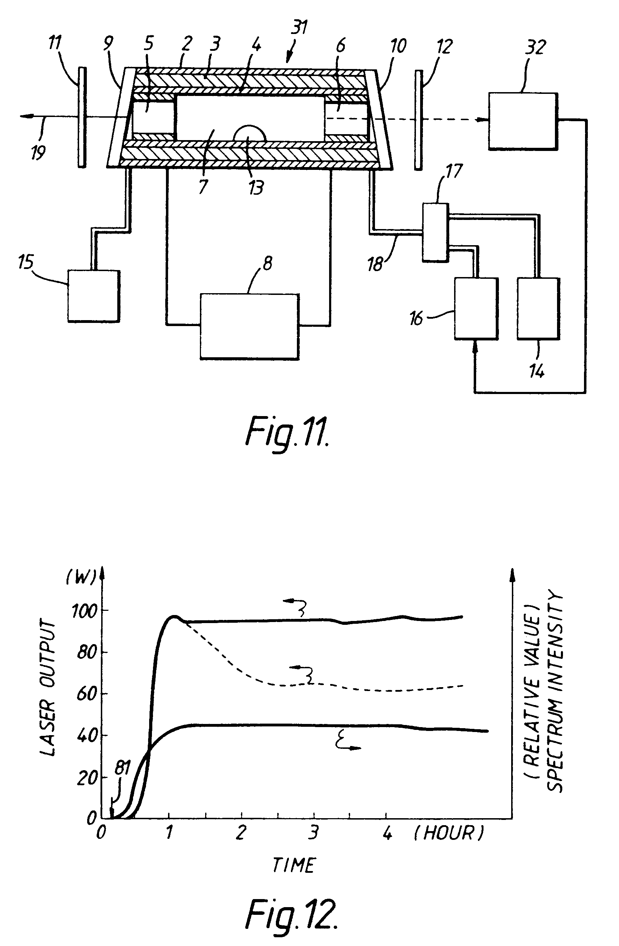

In metal vapour laser apparatus 31, as shown in Figure 11, for example, the copper atom spectrum line generated when the copper lumps are melted can be detected by a spectrum detector 32 through the mirror 12. By the signal from the spectrum detector 32, the molecular gas supply device 16 is controlled to supply the molecular gas.

Figure 12 shows the case of mixing the Hydrogen gas when the copper spectrum lines are detected at the point indicated by the arrow 81. In this case, the laser beam output remains at or near the maximum value, shown by a dotted line. On the other hand, in the case of no hydrogen gas, the output gradually reduces, as shown by the broken line.

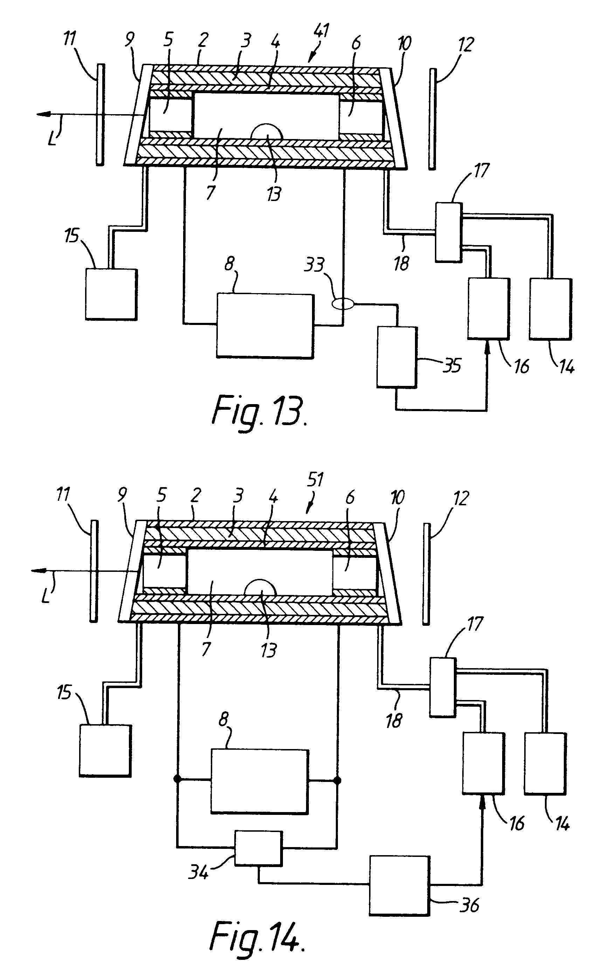

The metal vapour laser apparatus 41, as shown in Figure 13, has an electric current detector 33 which detects the current from the power supply 8. A current comparator 35 compares the current values obtained by the detector 33 before and after the metal medium melts or the laser beam is generated and the comparator 35 determines whether the molecular gas is to be supplied or not, and controls the molecular gas supply device 16.

The metal vapour laser apparatus 51, as shown in Figure 14, has a voltage detector 34 which detects the voltage of the power supply 8. A voltage comparator 36 compares the voltage obtained by the detector 34 with the voltage before generating and the comparator 36 determines whether the molecular gas is to be supplied or not, and controls the molecular gas supply device 16.

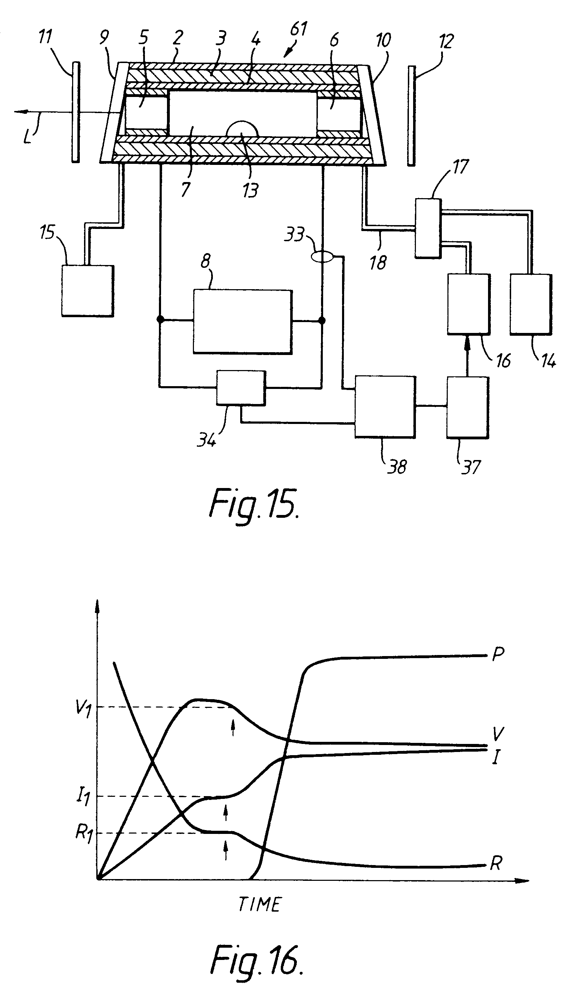

The metal vapour laser apparatus 61, shown in Figure 15, has a resistance detector 38 which detects and calculates the resistance value with the signals from the electric current detector 33 and the voltage detector 34. A resistance comparator 37 compares the resistance obtained by the detector 38 with the resistance before generating, and the comparator 37 determines whether to supply the molecular gas or not, and controls the molecular gas supply device 16.

In these cases of the apparatus shown in Figures 13 to 15, the values of the electric current (I), voltage (V), and resistance (R) vary, as represented by the curve (I), (V) and (R), respectively, as shown in Figure 16, for example. If the standard values of these parameters for supplying the molecular gas are defined as (I1), (V1), (R1), alternatively, when these values are related as (I.I1), (I.V1), (R.R1), (shown in Figure 16 by arrows), then the molecular gas is supplied to mix.

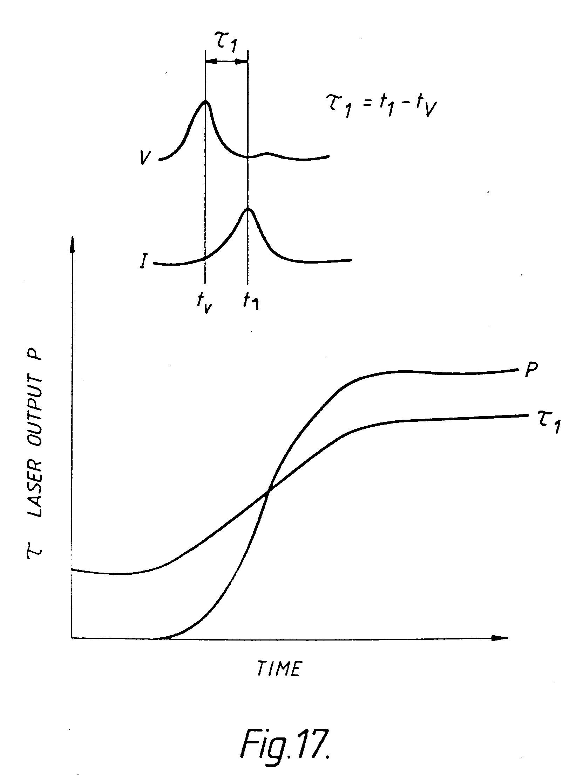

As shown in Figure 17, the interval (T1) between the discharge voltage peak at time (tv) and the discharge current peak at time (ti) is increased gradually with copper vapour generation. Therefore, when the value (T1) reaches a certain level or more, the molecular gas is supplied and mixed with the buffer gas.

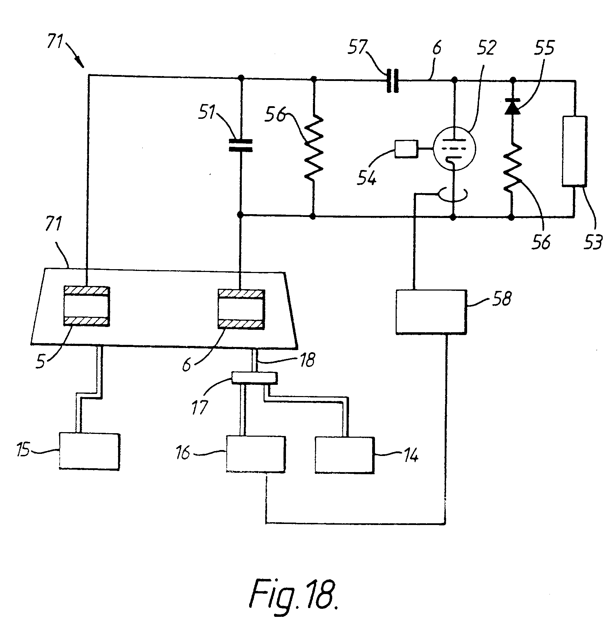

The metal vapour laser apparatus 71, shown in Figure 18, comprises a discharge circuit 61 including a charge electric source 53, a pulse generator 54, a diode 55, resistance 56 and capacitor 57, and a switching device 52 is used for the power supply 8 to apply a discharge voltage between the electrodes 5, 6 by opening and shutting the switching device.

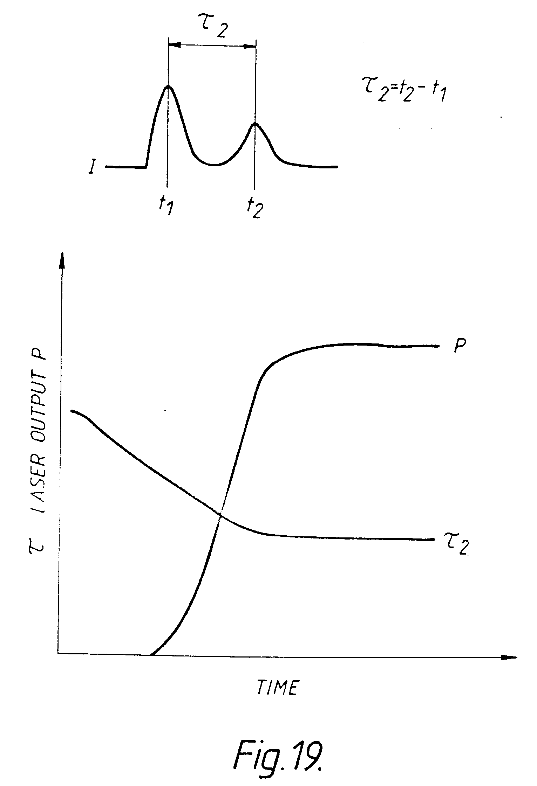

In the apparatus 71, a detector 58 detects the time interval T2 betwen the first pulse t1 and the second pulse t2 which flow through the switching device 52. When the value of T2 is lower than or equal to a certain level, the molecular gas is supplied and mixed with the buffer gas, as shown in Figure 19.

If the discharge voltage has relationship to time (V(t)), it is useful to decide supplying the molecular gas by measuring operation time.

The determination of whether to mix the molecular gas can also be made by the detecting of plasma resistance or the observing of discharge current wave shape and discharge voltage wave shape.

### Embodiment 3

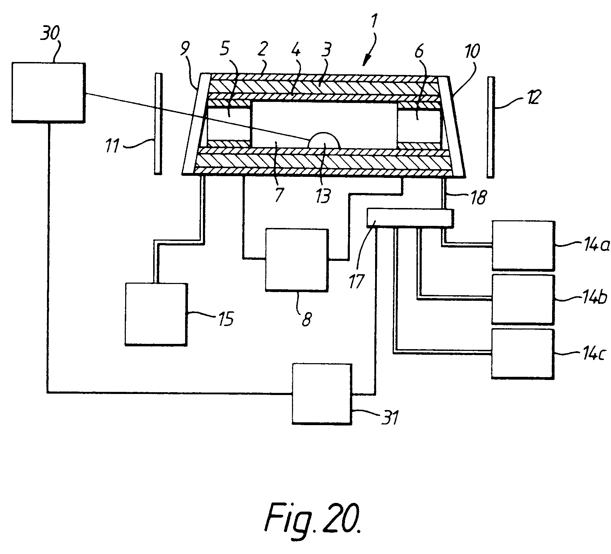

As shown in Figure 20, gas supply devices 14a, 14b and 14c are connected with the container 2 through the mixing device 17. The exhaust device 15 is also connected to the container 2. Helium, neon and hydrogen molecular gas are stored in the gas supply devices 14a, 14b and 14c, respectively. The gases are mixed by the mixing device 17 and supplied through the tube 18 to the container 2. The mixed gas is exhausted from the container 2 by the exhaust device 15 comprising a rotary pump.

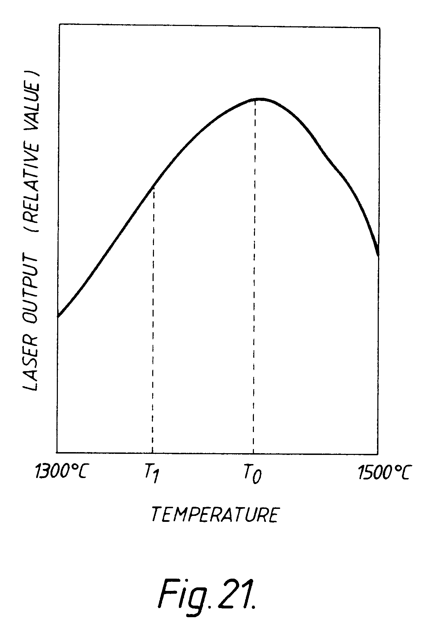

In this embodiment, the surface temperature of the metal lumps 13 is measured by the temperature detecting device 30. When laser beam is generated, the measuring results are sent to a control unit 31. In the control unit 31, for example, data for the relation between the surface temperature and laser output, such as shown in Figure 21, is stored. When the actual surface temperature T1 of the metal lumps 13 is different from the ideal temperature data To stored in the control unit 31, the control signal is sent from the unit 31 to the gas mixing device 17. Then the mixture ratio of the gases is adjusted and the surface temperature of the lumps 13 is also adjusted by controlling gas supply devices 14a, 14b and 14c.

The discharge resistance can be changed by controlling the mixture ratio of the gases. The metal vapour density in the plasma can be adjusted by changing the discharge resistance.

It is especially effective that the molecular gas, such as a hydrogen gas, is mixed in small amount to the rare gas, such as neon or helium, used as buffer gas. Because the molecular gas has a much lower exciting level compared with the exciting level of rare gas or metal atoms. Therefore, when a small amount of the molecular gas is mixed to the buffer gas, the electron temperature of the plasma is lowered and the discharge resistance increased to a higher level than the case of the buffer gas consisting of rare gas. However, when too much of the molecular gas is mixed, then electrons have insufficient energy to excite the metal vapour. It is preferable that the mixture ratio of the molecular gas to the buffer gas is 0.1% to 4.0%, more preferably 1.0% to 1.5%.

The measurement for the surface temperature of the metal lumps may be done at least one time after the laser beam has been generated for a duration of time. It may be useful to memorise the data of the mixture ratio or the time when to start supplying the molecular gas, etc., and use the data to generate the laser beam again.

If it is already known about the relationship between the surface temperature of the metal lumps and the inside temperature of the plasma tube 4 instead of the surface temperature of the metal lumps, the inside temperature of the plasma tube can be used as control data.

When the metal lumps are arranged in a housing, the temperature of the housing also can be used as control data instead of the surface temperature of the metal lumps.

### Embodiment 4

The use of metal lumps, such as gold lumps, copper lumps, etc., generated two or more colours of laser beams. For example, the copper metal vapour laser apparatus generates the laser beam of a green (511nm wavelength) beam G and a yellow (578nm wavelength) beam Y.

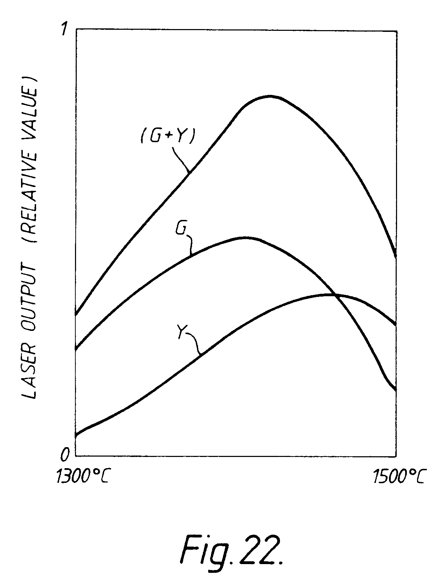

Figure 22 shows the correlation between the temperature of the copper metal lumps, the output level of each element G and Y and total output level of G + Y in the beam. Each element of the beam is changed depending on the temperature of the metal lumps.

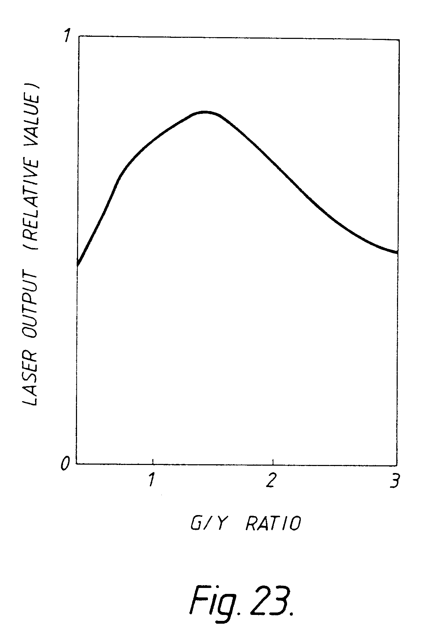

Figure 23 shows the correlation between the G/Y ratio (the ratio of green laser beam output to yellow beam output) and the total laser output. In the range of 1300°C to 1500°C, the G/Y ratio has a linear relation to the temperature of the metal lumps. Therefore, by the measurement for G/Y ratio, the temperature of the metal lumps can be known indirectly.

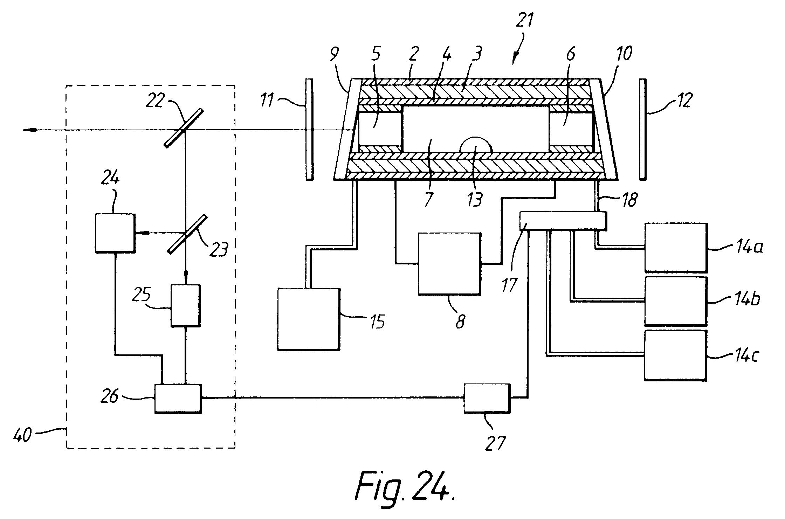

Figure 24 shows a metal vapour laser apparatus which can adjust the temperature by information of measuring the output ratio of each wavelength. The metal vapour laser apparatus 21 comprises a laser element measuring device 40. The measuring device 40 has a mirror 22 reflecting a part of the laser beam passing through the mirror 11, a dichroic mirror 23 reflecting the yellow element of the beam and passing through the green element of the beam, detecting devices 24, 25 detect each of the yellow element and the green element and a procesing unit 26 processes the data detected by the devices 24, 25 to obtain the G/Y ratio. The data of G/Y ratio obtained from the processing unit 26 is evaluated by a controller 27 to control the gas mixing device 17. The gas mixing device 17 controls the values of gas supply devices 14a, 14b and 14c to adjust the mixture ratio of the gases.

This embodiment uses the correlation between the output ratio of the wavelength element, such as G/Y ratio, and the temperature to control the mixture ratio of the gases. By controlling the mixture ratio, the discharge resistance is changed and the metal vapour density in the plasma adjusted, similar to Embodiment 3.

A ratio of an output in a certain wavelength to the total output (the sum of each output in each wavelength) may be used. When the laser has three wavelength elements, two elements are chosen from the three elements and the ratio of the two elements is used to adjust the mixture ratio of the buffer gas.

As shown in Figure 22, the peak output temperature for green element is lower than the peak output temperature of yellow element. Therefore, when only one element of the beam is needed, the temperature of the metal lumps is adjusted to get the maximum strength of that element by detecting the surface temperature of the metal lumps, as in Embodiment 3, or detecting the G/Y ratio, as in Embodiment 4.

Rare gas, such as neon, helium, etc., can be used as the buffer gas. Hydrogen gas, oxygen gas, nitrogen gas, carbon monoxide, carbon dioxide, methaneethane or other molecular gases including a hydrogen atom or mixture thereof can be used as the molecular gas in this invention.

Copper, gold and strontium are used as a material for metal lumps.

It is preferable that the diameter of the discharge area be within the range from about 60mm to 120mm giving an area from about 25cm² to 120cm². The sectional shape of the discharge can be of any convenient form.

The present invention has been described with respect to specific embodiments. However, other embodiments based on the principles of the present invention should be obvious to those of ordinary skill in the art. Such embodiments are intended to be covered by the claims.

## Claims

1. A metal vapour laser apparatus including an evacuatable container (4);
means (15) for evacuating the container;
a pair of spaced electrodes (5, 6) in the container;
a metal medium (13) in the container and means for supplying a buffer gas to the container;
characterised in the provision of
means for determining when melting of the metal medium occurs due to an electric discharge between the electrodes and means responsive to the determining means to cause at least one additional gas to be supplied to the container.

2. Laser apparatus as claimed in claim 1, characterised in that the determining means comprises a radiation detector (30) located outside the container and arranged to detect the temperature of the metal medium.

3. Laser apparatus as claimed in claim 1, characterised in that the determining means comprises a detector for detecting the metal vapour pressure in the container.

4. Laser apparatus as claimed in claim 3, characterised in that the determining means is arranged to cause the additional gas to be supplied when the metal vapour pressure exceeds 0.1% of the buffer gas.

5. Laser apparatus as claimed in claim 1, characterised in that the determining means detects an atomic spectrum line of the output laser beam.

6. Laser apparatus as claimed in claim 1, characterised in that the determining means detects the discharge current and is arranged to cause the additional gas to be supplied when the discharge current exceeds a predetermined value.

7. Laser apparatus as claimed in claim 1, characterised in that the determining means detects the discharge voltage and is arranged to cause the additional gas to be supplied when the discharge voltage falls below a predetermined value.

8. Laser apparatus as claimed in claim 1, characterised in that the determining me are detects the discharge resistance from values of discharge current and discharge voltage and is arranged to cause the additional gas to be supplied when the discharge resistance falls below a certain value.

9. Laser apparatus as claimed in claim 1, characterised in the provision of a switching device through which an electric power source is connected to the electrodes, and the determining means detects the interval of time between the first pulse and the second pulse of the current flowing in the switching device when the switching device is switched and is arranged to cause the additional gas to be supplied when the time interval exceeds a predetermined value.

10. Laser apparatus as claimed in any preceding claim, in which the additional gas is a molecular gas.

11. Laser apparatus as claimed in claim 10, characterised in that the molecular gas is in the range 0.1 to 4.0% of gas fill in the container.

12. Laser apparatus as claimed in claim 11, characterised in that the molecular gas in the range 1.0 to 1.5% of gas fill in the container.

13. Laser apparatus as claimed in claim 10, 11 or 12, characterised in that the molecular gas is hydrogen.

14. Laser apparatus as claimed in any preceding claim, characterised in that the buffer gas is neon or helium or a mixture thereof.

15. Laser apparatus as claimed in any preceding claim, characterised in that the metal medium is copper, gold or strontium.

16. A metal vapour laser apparatus including an evacuatable container; means for evacuating the container; a pair of spaced electrodes in the container; a metal medium in the container and means for supplying a buffer gas to the container;
characterised in the provision of means for determining when melting of the metal medium occurs due to an electric discharge between the electrodes; means responsive to the determining means for supplying at least one additional gas to the container and control means for controlling the mixture ratio of the gases by detecting a condition of the apparatus.

17. Apparatus as claimed in claim 16, characterised in that the control means is arranged to control the mixture ratio by detecting the temperature of the metal medium.

18. Apparatus as claimed in claim 16, characterised in that the control means is arranged to control the mixture ratio by detecting the ratio of different wavelengths of the laser beam.

19. A metal vapour laser apparatus as claimed in claim 16, 17 or 18, characterised in that the gases include at least one kind of molecular gas.

20. A method of operating a metal vapour laser apparatus for generating a laser beam having a vacuum container and a pair of spaced electrodes in the vacuum container, said method comprising the steps of supplying a buffer gas to the vacuum container under subatmospheric pressure; applying a discharge voltage across the electrodes to excite the buffer gas; vaporising a metal medium in the vacuum container by heat from the excited buffer gas; and supplying at least one additional gas to the vacuum container when the metal medium melts.

21. The method of claim 20, wherein the other gas is a molecular gas.

22. The method of claim 21, wherein the molecular gas is hydrogen gas.

23. The method of claim 20, 21 or 22, further comprising the steps of detecting the metal vapour pressure in the vacuum container; and controlling the supply of molecular gas to the vacuum container when the metal vapour pressure reaches a value of 0.01% or more.

24. The method of claim 23, further comprising the step of detecting the metal surface temperature when the metal vapour pressure reaches the value of 0.01% for the gas.

25. The method of claim 21, further comprising the step of detecting an atomic spectrum line to control the supply of molecular gas to the container.

26. The method of claim 21, further comprising the step of detecting the electric current of the applied discharge voltage to control the supply of molecular gas to the container.

27. The method of claim 21, further comprising the step of detecting the discharge voltage to control the supply of molecular gas to the container.

28. The method of claim 21, further comprising the step of detecting the time of discharge current peak and the time of discharge voltage peal and supplying molecular gas to the container after the difference between the time of the discharge current peal and the time of discharge voltage peal is above a certain value.

29. The method of claim 21, further comprising the step of detecting the discharge resistance from the values of discharge current and discharge voltage and supplying molecular gas to the container after the discharge resistance is under a certain value.

30. The method of claim 21, wherein the amount of molecular gas is in the range of 0.1 to 4.0% of gas in the container.

31. The method of claim 20, wherein at least two kinds of rare gas are supplied as buffer gas into the container.

## Patentansprüche

1. Metalldampflaservorrichtung, mit einem evakuierbaren Behälter (4);
einer Einrichtung (15) zum Evakuieren des Behälters;
einem Paar beabstandeter Elektroden (5, 6), die im Behälter angeordnet sind;
einem Metall-Medium (13) im Behälter und mit einer Einrichtung, um ein Puffergas in den Behälter einzuleiten;
**gekennzeichnet durch** das Vorsehen von
einer Einrichtung, um zu erfassen, wann das Schmelzen des Metall-Mediums infolge einer elektrischen Entladung zwischen den Elektroden stattfindet, und von einer Einrichtung, die auf die Erfassungseinrichtung anspricht, um zu bewirken, daß zumindest ein Zusatzgas in den Behälter eingeleitet wird.

2. Laservorrichtung nach Anspruch 1, **dadurch gekennzeichnet,** daß die Erfassungseinrichtung einen Strahlungsdetektor (30) aufweist, der außerhalb des Behälters angeordnet und dazu ausgestaltet ist, die Temperatur des Metall-Mediums zu erfassen.

3. Laservorrichtung nach Anspruch 1, **dadurch gekennzeichnet,** daß die Erfassungseinrichtung einen Detektor aufweist, um den Metalldampfdruck im Behälter zu erfassen.

4. Laservorrichtung nach Anspruch 3, **dadurch gekennzeichnet,** daß die Erfassungseinrichtung dazu ausgestaltet ist, das Einleiten eines Zusatzgases zu bewirken, wenn der Metalldampfdruck 0,1% des des Puffergases übersteigt.

5. Laservorrichtung nach Anspruch 1, **dadurch gekennzeichnet,** daß die Erfassungseinrichtung eine atomare Spektrallinie des austretenden Laserstrahls erfaßt.

6. Laservorrichtung nach Anspruch 1, **dadurch gekennzeichnet,** daß die Erfassungseinrichtung den Entladungsstrom erfaßt und dazu ausgestaltet ist, das Einleiten eines Zusatzgases zu bewirken, wenn der Entladungsstrom einen vorbestimmten Wert übersteigt.

7. Laservorrichtung nach Anspruch 1, **dadurch gekennzeichnet,** daß die Erfassungseinrichtung die Entladungsspannung erfaßt und dazu ausgestaltet ist, das Einleiten eines Zusatzgases zu bewirken, wenn die Entladungsspannung unter einen vorbestimmten Wert sinkt.

8. Laservorrichtung nach Anspruch 1, **dadurch gekennzeichnet,** daß die Erfassungseinrichtung den Entladungswiderstand aus den Werten des Entladungsstromes und der Entladungsspannung bestimmt und dazu ausgestaltet ist, das Einleiten eines Zusatzgases zu bewirken, wenn der Entladungswiderstand unter einen bestimmten Wert sinkt.

9. Laservorrichtung nach Anspruch 1, **gekennzeichnet durch** das Vorsehen einer Schaltereinrichtung, mittels derer eine elektrische Energiequelle an die Elektroden angeschlossen wird, wobei die Erfassungseinrichtung das Zeitintervall zwischen dem ersten Impuls und dem zweiten Impuls des in der Schaltereinrichtung fließenden Stromes bestimmt, wenn die Schaltereinrichtung umgeschaltet wird, und die dazu ausgestaltet ist, das Einleiten eines Zusatzgases zu bewirken, wenn das Zeitintervall einen vorbestimmten Wert übersteigt.

10. Laservorrichtung nach einem der vorhergehenden Ansprüche, wobei das Zusatzgas ein molekulares Gas ist.

11. Laservorrichtung nach Anspruch 10, **dadurch gekennzeichnet,** daß der Anteil des molekularen Gases im Bereich von 0,1 bis 4,0% des im Behälter befindlichen Gases liegt.

12. Laservorrichtung nach Anspruch 11, **dadurch gekennzeichnet,** daß der Anteil des molekularen Gases im Bereich von 1,0 bis 1,5% des im Behälter befindlichen Gases liegt.

13. Laservorrichtung nach Anspruch 10, 11 oder 12, **dadurch gekennzeichnet,** daß das molekulare Gas Wasserstoff ist.

14. Laservorrichtung nach einem der vorhergehenden Ansprüche, **dadurch gekennzeichnet,** daß das Puffergas Neon oder Helium oder eine Mischung daraus ist.

15. Laservorrichtung nach einem der vorhergehenden Ansprüche, **dadurch gekennzeichnet,** daß das Metall-Medium Kupfer, Gold oder Strontium ist.

16. Metalldampflaservorrichtung, mit einem evakuierbaren Behälter (4); einer Einrichtung (15) zum Evakuieren des Behälters; einem Paar beabstandeter Elektroden (5, 6), die im Behälter angeordnet sind; einem sich im Behälter befindlichen Metall-Medium (13) und einer Einrichtung, um ein Puffergas in den Behälter einzuleiten;
**gekennzeichnet durch** das Vorsehen einer Einrichtung, um zu erfassen, wann das Schmelzen des Metall-Mediums infolge einer elektrischen Entladung zwischen den Elektroden stattfindet, einer Einrichtung, die auf die Erfassungseinrichtung anspricht, um zu bewirken, daß zumindest ein Zusatzgas in den Behälter eingeleitet wird, und einer Steuereinrichtung zur Steuerung des Mischungsverhältnisses der Gase, indem ein Zustand der Vorrichtung erfaßt wird.

17. Vorrichtung nach Anspruch 16, **dadurch gekennzeichnet**, daß die Steuereinrichtung dazu ausgestaltet ist, das Mischungsverhältnis zu steuern, indem die Temperatur des Metall-Mediums erfaßt wird.

18. Vorrichtung nach Anspruch 16, **dadurch gekennzeichnet**, daß die Steuereinrichtung dazu ausgestaltet ist, das Mischungsverhältnis zu steuern, indem das Verhältnis der verschiedenen Wellenlängen des Laserstrahls erfaßt wird.

19. Metalldampflaservorrichtung nach Anspruch 16, 17 oder 18, **dadurch gekennzeichnet,** daß die Gase zumindest eine Art eines molekularen Gases enthalten.

20. Verfahren zum Betreiben einer Metalldampflaservorrichtung zum Erzeugen eines Laserstrahls, die einen Vakuumbehälter und ein Paar beabstandete, im Vakuumbehälter befindliche Elektroden aufweist, wobei das Verfahren die Schritte des Einleitens eines Puffergases in den Vakuumbehälter unter Unterdruck; des Anlegens einer Entladungsspannung an die Elektroden, um das Puffergas anzuregen; des Verdampfens eines Metall-Mediums im Vakuumbehälter durch die Hitze des angeregten Puffergases; und des Einleitens zumindest eines Zusatzgases in den Vakuumbehälter umfaßt, wenn das Metall-Medium schmilzt.

21. Verfahren nach Anspruch 20, wobei das Zusatzgas ein molekulares Gas ist.

22. Verfahren nach Anspruch 21, wobei das molekulare Gas Wasserstoffgas ist.

23. Verfahren nach Anspruch 20, 21 oder 22, das weiterhin die Schritte des Erfassens des Metalldampfdrucks im Vakuumbehälter; und der Steuerung der Einleitung des molekularen Gases in den Vakuumbehälter umfaßt, wenn der Metalldampfdruck einen Wert von 0,01% oder mehr erreicht.

24. Verfahren nach Anspruch 23, das weiterhin den Schritt des Erfassens der Metalloberflächentemperatur umfaßt, wenn der Metalldampfdruck für das Gas den Wert von 0,01% erreicht.

25. Verfahren nach Anspruch 21, das weiterhin den Schritt des Erfassens einer atomaren Spektrallinie umfaßt, um das Einleiten des molekularen Gases in den Behälter zu steuern.

26. Verfahren nach Anspruch 21, das weiterhin den Schritt des Erfassens des elektrischen Stromes der angelegten Entladungsspannung umfaßt, um das Einleiten des molekularen Gases in den Behälter zu steuern.

27. Verfahren nach Anspruch 21, das weiterhin den Schritt des Erfassens der Entladungsspannung umfaßt, um das Einleiten des molekularen Gases in den Behälter zu steuern.

28. Verfahren nach Anspruch 21, das weiterhin den Schritt des Erfassens des Zeitpunktes der Entladungsstromspitze und des Zeitpunktes der Entladungsspannungsspitze und des Einleitens des molekularen Gases in den Behälter umfaßt, wenn die Differenz zwischen dem Zeitpunkt der Entladungsstromspitze und dem Zeitpunkt der Entladungsspannungsspitze über einem bestimmten Wert liegt.

29. Verfahren nach Anspruch 21, das weiterhin den Schritt des Erfassens des Entladungswiderstandes aus den Werten des Entladungsstromes und der Entladungsspannung und des Einleitens des molekularen Gases in den Behälter umfaßt, wenn der Entladungswiderstand unter einem bestimmten Wert liegt.

30. Verfahren nach Anspruch 21, wobei der Anteil des molekularen Gases im Bereich von 0,1 bis 4,0% des im Behälter befindlichen Gases liegt.

31. Verfahren nach Anspruch 20, wobei zumindest zwei Arten von Edelgasen als Puffergas in den Behälter eingeleitet werden.

## Revendications

1. Appareil laser à vapeur métallique comprenant un conteneur (4) dont le contenu peut être évacué;
un moyen d'évacuer (15) le contenu du conteneur (4);
deux électrodes distantes l'une de l'autre (5, 6) placées à l'intérieur du conteneur;
un milieu métallique (13) placé à l'intérieur du conteneur et un moyen permettant d'alimenter un gaz tampon dans le conteneur;
cet appareil étant caractérisé par le fait qu'on a prévu un moyen de détermination du moment auquel la fusion du milieu métallique se produit sous l'effet d'une décharge électrique qui se produit entre les électrodes et un moyen qui répond à ce moyen de détermination pour faire pénétrer au moins un autre gaz dans le conteneur.

2. Appareil laser selon la revendication 1, caractérisé par le fait que ce moyen de détermination est constitué par un détecteur de rayonnement (30) placé à l'extérieur du conteneur et aménagé pour détecter la température du milieu métallique.

3. Appareil laser selon la revendication 1, caractérisé par le fait que le moyen de détermination est constitué par un détecteur pour détecter la pression de la vapeur métallique à l'intérieur du conteneur.

4. Appareil laser selon la revendication 3, caractérisé par le fait que le moyen de détermination est aménagé pour introduire le gaz supplémentaire lorsque la pression de la vapeur métallique est supérieure à 0,1% de celle du gaz tampon.

5. Appareil laser selon la revendication 1, caractérisé par le fait que le moyen de détermination détecte des lignes spectrales atomiques du faisceau laser de sortie.

6. Appareil laser selon la revendication 1, caractérisé par le fait que le moyen de détermination détecte l'intensité du courant de décharge et a été étudié pour commander l'alimentation du gaz supplémentaire lorsque l'intensité du courant de décharge dépasse une valeur prédéterminée.

7. Appareil laser selon la revendication 1, caractérisé par le fait que le moyen de détermination détecte la tension du courant de décharge et a été étudié pour commander l'alimentation du gaz supplémentaire lorsque la tension du courant de décharge tombe en-dessous d'une valeur prédéterminée.

8. Appareil laser selon la revendication 1, caractérisé par le fait que le moyen de détermination détecte la résistance de décharge à partir des valeurs de l'intensité du courant de décharge et de la tension du courant de décharge et a été étudié pour commander l'alimentation du gaz supplémentaire lorsque la résistance de décharge tombe en-dessous d'une valeur déterminée.

9. Appareil laser selon la revendication 1, caractérisé par le fait qu'on a prévu un dispositif de commutation qui permet de brancher une source d'alimentation électrique aux électrodes de décharge et le moyen de détermination détecte l'intervalle de temps compris entre la première impulsion et la seconde impulsion du courant qui traverse le dispositif de commutation pour commander l'alimentation du gaz supplémentaire lorsque l'intervalle de temps dépasse une valeur prédéterminée.

10. Appareil laser selon l'une quelconque des revendications précédentes, dans laquelle le gaz supplémentaire est un gaz moléculaire.

11. Appareil laser selon la revendication 10, caractérisé par le fait que le gaz moléculaire est de l'ordre de 0,1% à 4% du gaz qui remplit le conteneur 4.

12. Appareil laser selon la revendication 11, caractérisé par le fait que le gaz moléculaire de l'ordre de 1% à 1,5% du gaz qui remplit le conteneur 4.

13. Appareil laser selon la revendication 10 et la revendication 11 ou la revendication 12, caractérisé par le fait que le gaz moléculaire est de l'hydrogène.

14. Appareil laser selon l'une quelconque des revendications précédente, caractérisé par le fait que le gaz tampon est du néon ou de l'hélium ou un mélange des deux.

15. Appareil laser selon l'une quelconque des revendications précédentes, caractérisé par le fait que le milieu métallique est du cuivre, de l'or ou du strontium.

16. Appareil laser à vapeur métallique comprenant un conteneur 4 dont le contenu peut être évacué; un moyen d'évacuer le contenu de ce conteneur 4; un milieu métallique placé à l'intérieur du conteneur 4 et un moyen permettant d'alimenter un gaz tampon dans le conteneur 4;
cet appareil étant caractérisé par le fait qu'on a prévu un moyen de détermination du moment de fusion du milieu métallique provoqué par une décharge électrique appliquée entre les deux électrodes; un moyen qui répond à ce moyen de détermination pour alimenter au moins un gaz supplémentaire dans le conteneur 4 et un moyen de contrôle pour contrôler le ratio de mélange de ces gaz par détection d'une condition de l'appareil.

17. Appareil selon la revendication 16, caractérisé par le fait que le moyen de contrôle a été étudié pour contrôler le ratio de mélange par détection de la température du milieu métallique.

18. Appareil selon la revendication 16, caractérisé par le fait que le moyen de contrôle a été étudié pour contrôler le ratio de mélange par détection du ratio de différentes longueurs d'ondes du faisceau laser.

19. Appareil laser à vapeur métallique selon la revendication 16, la revendication 17 ou la revendication 18, caractérisé par le fait qu'on compte parmi les gaz au moins un gaz moléculaire.

20. Méthode d'utilisation d'un appareil laser à vapeur métallique pour générer un faisceau laser, comportant un conteneur sous vide et deux électrodes distantes l'une de l'autre à l'intérieur du conteneur sous vide, cette méthode étant constituée par les phases suivantes: alimentation d'un gaz tampon à une pression inférieure à la pression atmosphérique dans le conteneur sous vide; application d'une tension de décharge entre les électrodes pour exciter le gaz tampon; vaporisation du milieu métallique à l'intérieur du conteneur sous vide sous l'effet de la chaleur dégagée par le gaz tampon excité; et alimentation d'au moins un gaz supplémentaire dans le conteneur sous vide lorsque le milieu métallique est en fusion.

21. Méthode selon la revendication 20, dans laquelle l'autre gaz est un gaz moléculaire.

22. Méthode selon la revendication 21, dans laquelle le gaz moléculaire est de l'hydrogène gazeux.

23. Méthode selon la revendication 20, la revendication 21 ou la revendication 22, qui comprend en outre une phase de détection de la pression de la vapeur métallique à l'intérieur du conteneur sous vide; une phase de commande d'alimentation du gaz moléculaire dans le conteneur sous vide lorsque la pression de la vapeur métallique atteint la valeur de 0,01% ou plus.

24. Méthode selon la revendication 23, comprenant en outre une phase de détection de la température superficielle du métal lorsque la pression de la vapeur métallique atteint la valeur de 0,01% pour le gaz.

25. Méthode selon la revendication 21, comprenant en outre une phase de détection des lignes spectrales atomiques pour commander l'alimentation du gaz moléculaire dans le conteneur.

26. Méthode selon ma revendication 21, comprenant en outre une phase de détection de l'intensité de la tension électrique appliquée entre les électrodes pour commander l'alimentation du gaz moléculaire dans le conteneur.

27. Méthode selon la revendication 21, comprenant en outre une phase de détection de la tension de décharge pour commander l'alimentation du gaz moléculaire dans le conteneur.

28. Méthode selon la revendication 21, comprenant en outre une phase de détection de la durée de l'intensité de décharge maximale et de la durée de la tension maximale de décharge et d'alimentation du gaz moléculaire dans le conteneur après que la différence entre la durée de l'intensité maximale de décharge et la durée de tension maximale ait dépassé une valeur donnée.

29. Méthode selon la revendication 21, comprenant en outre une phase de détection de la résistance de décharge à partir des valeurs d'intensité de décharge et de tension de décharge et d'alimentation du gaz moléculaire dans le conteneur après que la résistance de décharge soit tombée en-dessous d'une valeur déterminée.

30. Méthode selon la revendication 21, dans laquelle la quantité de gaz moléculaire est de l'ordre de 0,1% à 4% du gaz contenu dans le conteneur.

31. Méthode selon la revendication 20, dans laquelle au moins deux gaz rares différents sont introduits comme gaz tampon dans le conteneur.
